# EUROPEAN PATENT SPECIFICATION

(11) **EP 1 932 887 B1**
(45) Date of publication and mention of the grant of the patent: **02.02.2011**
(21) Application number: 07254708.6
(22) Date of filing: 05.12.2007
(51) Int. Cl.: C08L 83/04, C08K 5/057

(54) **Room temperature curable organopolysiloxane compositions**
Bei Raumtemperatur härtbare Organopolysiloxan-Zusammensetzungen
Compositions d'organopolysiloxane durcissables à température ambiante

(30) Priority: 11.12.2006 JP 2006333064
(43) Date of publication of application: 18.06.2008
(73) Proprietor: Shin-Etsu Chemical Co., Ltd., Tokyo (JP)
(72) Inventor: Araki, Tadashi, Annaka-shi Gunma-ken (JP); Kimura, Tsuneo, Annaka-shi Gunma-ken (JP)
(74) Representative: Stoner, Gerard Patrick

(56) References cited:
- EP-A- 0 853 101
- US-A- 4 111 890
- US-A- 5 908 909

## Description

### TECHNICAL FIELD

This invention relates to room temperature curable organopolysiloxane compositions, and more particularly, to room temperature curable organopolysiloxane compositions using an oligomeric form of titanium catalyst, enabling many advantages including ease of preparation, consistent quality from immediately after preparation, shelf stability, resin adhesion, and low odor.

### BACKGROUND

Various types of room temperature curable organopolysiloxane compositions which cure at room temperature upon contact with air-borne moisture are well known in the art. Among others, those compositions of the type that cure while liberating alcohol are preferentially used in sealing, bonding and coating of electric and electronic equipment, because they do not cause corrosion-to metals.

One typical composition of the alcohol type is described in JP-B 39-27643 as comprising an organopolysiloxane end-blocked with hydroxyl groups, an alkoxysilane, and an organic titanium compound. Also JP-A 55-43119 discloses a composition comprising an organopolysiloxane end-blocked with alkoxysilyl groups, an alkoxysilane, and alkoxy titanium. Lately, JP-B 7-39547 discloses an organopolysiloxane composition which remains fully stable during storage in the sealed state. JP-A 2001-152020 discloses a composition which is improved in durable adhesion. Japanese Patent No. 3,602,650 (JP-A 9-3330) discloses a composition featuring minimized yellowing and a high cure rate due to the use of tetra-tert-butyl titanate or tetra-tert-pentyl titanate.

However, the compositions of JP-B 39-27643 and JP-A 55-43119 are less stable during shelf storage. The compositions of JP-B 7-39547 and JP-A 2001-152020 are less adherent to resins. We note that in the JP 3,602,650 compositions, the tetra-tert-butyl titanate and tetra-tert-pentyl titanate are hydrolysable and volatile so that they volatilise off with the reaction heat released during compounding. Also we note that because of the fast cure there tend to be prematurely-cured clumps in the composition.

An object of the present invention is to provide new and useful room temperature curable organopolysiloxane compositions, methods of preparing them and methods of using them. Desirable properties of particular interest include ease of preparation, consistent quality from immediately after preparation, shelf stability, resin adhesion, and low odor.

The inventors have discovered that a room temperature curable organopolysiloxane composition which is easy to prepare, consistent in quality from immediately after preparation, shelf stable, and adherent to resins, and gives off little odor, is obtainable using an organoxytitanium oligomer, and specifically an alkoxytitanium oligomer containing those alkoxy groups having a tertiary carbon atom bonded to an oxygen atom in a higher proportion than those alkoxy groups having a primary or secondary carbon atom bonded to an oxygen atom, as a catalyst.

Accordingly, the present invention provides a room temperature curable organopolysiloxane composition comprising
(A) 100 parts by weight of at least one member of organopolysiloxanes having the general formulae (1) and (2): 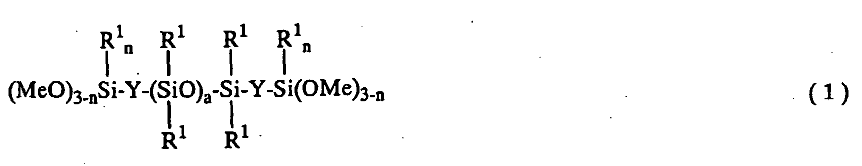 wherein R¹ is a substituted or unsubstituted, monovalent saturated hydrocarbon group of 1 to 10 carbon atoms, Y is an alkylene group of 1 to 5 carbon atoms, Me is methyl, "a" is an integer of at least 10, and n is independently an integer of 0 or 1, 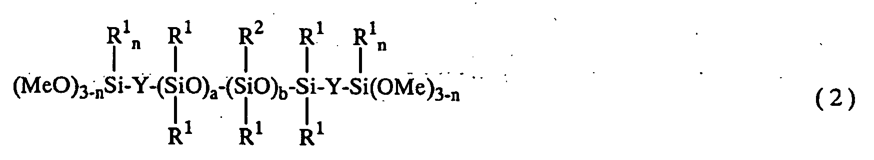 wherein R¹, Y, Me, "a" and n are as defined above, R² is a hydrolyzable group-containing branched chain having the general formula (3):

   -Y-SiR¹ₙ(OMe)₃₋ₙ (3)

   wherein Y, R¹, Me, and n are as defined above, and b is an integer of 1 to 10,
(B) 0.1 to 20 parts by weight of an alkoxysilane compound containing, on average, at least two silicon-bonded hydrolyzable groups in a molecule, a partial hydrolyzate thereof or a mixture thereof,
(C) 1 to 15 parts by weight of a compound having the general formula (4):

   Ti[OTi]_{c}[OR]_{d}[OCR₃]ₑ (4)

   wherein R is a monovalent aliphatic hydrocarbon group of 1 to 10 carbon atoms free of a tertiary hydrocarbon group, c is an integer of 1 to 3, d and e are integers satisfying 0.5 ≤ e/(d+e) ≤ 1, and
(D) 0 to 10 parts by weight of a silane coupling agent.

In component (C), R is preferably methyl, ethyl or isopropyl, and more preferably [OR] is isopropoxy, and [OCR₃] is tert-butoxy and/or tert-pentanol.

The term "room temperature curable" is sometimes abbreviated as RTV.

### BENEFITS

The RTV organopolysiloxane composition of the invention is easy to prepare, consistent in quality from immediately after preparation, shelf stable, and adherent to resins, and gives off a less odor.

### FURTHER EXPLANATIONS; OPTIONS AND PREFERENCES

Component (A) which serves as a base polymer in the inventive composition is at least one organopolysiloxane selected from organopolysiloxanes having the general formulae (1) and (2). 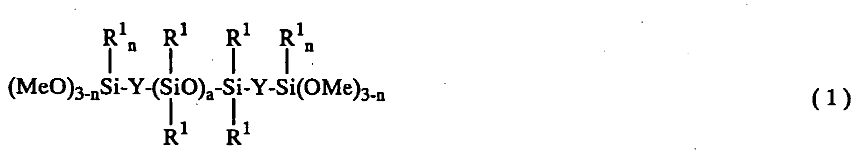 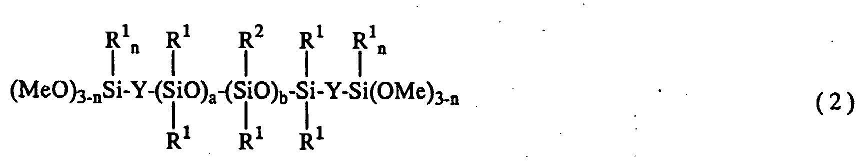 Herein R¹ is a substituted or unsubstituted, monovalent saturated hydrocarbon group of 1 to 10 carbon atoms, Y is an alkylene group of 1 to 5 carbon atoms, and Me is methyl. The subscript "a" is an integer of at least 10, "b" is an integer of 1 to 10, and n is independently an integer of 0 or 1. R² is a hydrolyzable group-containing branched chain having the general formula (3):

-Y-SiR¹ₙ (OMe)₃₋ₙ (3)

wherein Y, R¹, Me, and n are as defined above.

In formulae (1) and (2), R¹ is independently selected from substituted or unsubstituted, monovalent saturated hydrocarbon groups of 1 to 10 carbon atoms, preferably 1 to 6 carbon atoms, for example, alkyl groups such as methyl, ethyl and propyl, cycloalkyl groups such as cyclohexyl, and substituted forms of the foregoing in which some hydrogen atoms are replaced by halogen atoms, such as 3,3,3-trifluoropropyl. A plurality of R¹ in formulae (1) and (2) may be the same or different.

Y is an alkylene group of 1 to 5 carbon atoms. Exemplary of the alkylene group are methylene, ethylene, propylene, butylene, and hexylene.

The subscript "a" is an integer of at least 10, preferably from 20 to 10,000, "b" is an integer of 1 to 10, preferably from 1 to 5, and n is independently an integer of 0 or 1.

Component (A) should preferably have a viscosity of 100 to 1,000,000 mPa-s at 25°C. With a viscosity of less than 100 mPa-s, the composition cures into an elastomer which may not be endowed with good physical properties, especially flexibility and elongation. With a viscosity of more than 1,000,000 mPa-s, the composition may become viscous and difficult to discharge or dispense when applied to substrates. The viscosity of component (A) is more preferably from 5,000 to 100,000 mPa-s at 25°C. It is noted that the viscosity is measured by a rotational viscometer.

Component (B) is an alkoxysilane compound containing, on average, at least two silicon-bonded hydrolyzable groups in its molecule, a partial hydrolyzate thereof, or a mixture thereof. Exemplary alkoxysilane compounds (B) include tri-alkoxysilanes such as methyltrimethoxysilane, vinyltrimethoxysilane, phenyltrimethoxysilane, and vinyltriethoxysilane, and partial hydrolytic condensates of these silanes. These compounds may be used alone or in admixture.

Difunctional alkoxysilanes such as diphenyldimethoxysilane may be additionally used in combination with the alkoxysilane (B) when it is desired that the rubber elastomer after curing be endowed with low modulus. When a choice is made among organoxysilane compounds having a boiling point of at least 150°C under normal pressure and/or partial hydrolyzates thereof, there is obtained a composition with a less odor. Illustrative examples of organoxysilane compounds include tetrafunctional alkoxysilanes such as tetraethoxysilane (b.p. 168.8°C) and methyl cellosolve orthosilicate (b.p. 150°C/3 mmHg), trifunctional alkoxysilanes such as ethyltriethoxysilane (b.p. 160°C), vinyltriethoxysilane (b.p. 158°C), n-butyltrimethoxysilane (b.p. 164.8°C), propyltrimethoxysilane (b.p. 142°C), phenyltrimethoxysilane (b.p. 130°C/45 mmHg), octyltrimethoxysilane (b.p. 100°C/2 mmHg), and n-butyltriethoxysilane (b.p. 70°C/6 mmHg), and partial hydrolytic condensates thereof. Even in the case of silane compounds having a boiling point of less than 150°C under normal pressure, dimers or trimers obtained by hydrolytic condensation thereof are acceptable. These organoxysilane compounds may be used alone or in admixture.

An appropriate amount of component (B) is in the range of 0.1 to 20 parts by weight, preferably 1 to 10 parts by weight per 100 parts by weight of component (A). Less than 0.1 pbw of component (B) fails to achieve sufficient crosslinking or form a composition having the desired rubber elasticity whereas compositions with more than 20 pbw of component (B) tend to exhibit low mechanical properties after curing.

Component (C) is a catalyst for helping the composition cure. It is an organoxytitanium oligomer having the general formula (4).

Ti [OTi]_{c}[OR]_{d}[OCR₃]ₑ (4)

Herein R is independently a monovalent aliphatic hydrocarbon group of 1 to 10 carbon atoms free of a tertiary hydrocarbon group, c is an integer of 1 to 3, d and e are integers satisfying d+e = 2c+4 and 0.5 ≤ e/(d+e) ≤ 1.

The monovalent aliphatic hydrocarbon groups of 1 to 10 carbon atoms represented by R are free of tertiary hydrocarbon group (at least, adjacent the oxygen atom), and are preferably alkyl groups, which may be straight or have a branched chain, for example, methyl, ethyl, n-propyl, isopropyl and n-butyl. The preferred aliphatic hydrocarbon groups are those of 1 to 4 carbon atoms, and methyl, ethyl, and isopropyl are more preferred. More particularly, desirable [OR] moieties are or include isoproproxy, and desirable [OCR₃] moieties are or include tert-butoxy and/or tert-pentoxy. Plural R's in formula (4) may be the same or different.

The subscript "c"is an integer of 1 to 3 and preferably an integer of 1 or 2. If c is less than 1, the compound is a monomer, meaning that the titanium catalyst is likely to volatilize off by the reaction heat during compounding and has a high catalytic activity to provide a fast cure so that cured clumps will be co-present in the composition. As a result, the step of filtering or otherwise removing such cured clumps becomes necessary. If c is more than 3, the titanium catalyst itself becomes yellowed or white turbid to give an anomalous appearance and its catalytic activity is insufficient for effective cure of the composition.

The subscripts "d" and "e" are integers satisfying d+e = 2c+4. The organoxytitanium oligomer is characterized in that a proportion of those alkoxy groups having a tertiary carbon atom bonded to an oxygen atom is higher than a proportion of those alkoxy groups having a primary or secondary carbon atom bonded to an oxygen atom. It is essential that "d" indicative of the amount of those alkoxy groups [OR] having a primary or secondary carbon atom bonded to an oxygen atom and "e" indicative of the amount of those alkoxy groups [OCR₃] having a tertiary carbon atom bonded to an oxygen atom be correlated such that e/(d+e) is from 0.5 to 1, and preferably from 0.7 to 1. This ratio largely affects the shelf stability of the composition. If the ratio is less than 0.5, few compositions are fully shelf stable.

The organoxytitanium oligomers of formula (4) include those of the following formula. 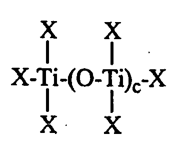 Herein X is independently OR or OCR₃, wherein OR and OCR₃ satisfy a ratio in the above-defined range, and R and c are as defined above.

Suitable organoxytitanium oligomers are commercially available, for example, under the trade name of T-2837 and T-2839 from Matsumoto Chemical Co., Ltd.

Component (C) may be used alone or in admixture. Component (C) is added in amounts of 1 to 15 parts, preferably 2 to 10 parts by weight per 100 parts by weight of component (A). Outside the range, less amounts of component (C) fail to ensure storage stability and require a longer time until the inventive composition is fully cured. Inversely, excessive amounts of component (C) give rise to problems including degradation of cured mechanical properties, retarded depth curing, remarkable yellowing of cured parts, and poor storage stability.

In the organopolysiloxane composition of the invention, (D) a silane coupling agent is optionally compounded. The silane coupling agent functions to improve the adhesion of the inventive composition or as a tackifier. Well-known silane coupling agents may be advantageously used and include vinylsilane coupling agents, (meth)acrylic silane coupling agents, epoxysilane coupling agents, aminosilane coupling agents, and mercaptosilane coupling agents. Specific examples include vinyltris(β-methoxyethoxy)silane, γ-methacryloxypropyltrimethoxysilane, β-(3,4-epoxycyclohexyl)ethyltrimethoxysilane, γ-glycidoxypropyltrimethoxysilane, γ-glycidoxypropylmethyltriethoxysilane, N-β-(aminoethyl)-γ-aminopropyltrimethoxysilane, γ-aminopropyltriethoxysilane, and γ-mercaptopropyltrimethoxysilane.

Component (D) is compounded in amounts of 0 to 10 parts, and preferably 0.1 to 5 parts by weight per 100 parts by weight of component (A). The silane coupling agent need not be used if the composition even in the absence of silane coupling agent adheres to a substrate; this usually depends on particular type of filler and substrate. When the silane coupling agent is used, more than 10 pbw is economically disadvantageous.

In addition to the foregoing components (A) to (D), the RTV organopolysiloxane composition in a preferred embodiment may further comprise an inorganic filler in fine powder form. The filler can improve the flow of the composition prior to curing and impart necessary mechanical properties to the rubbery elastomer after curing. Examples of suitable inorganic fillers include finely divided quartz, fumed silica, crystalline silica, heavy calcium carbonate, light calcium carbonate, precipitated silica, fumed titanium dioxide, diatomaceous earth, aluminum hydroxide, microparticulate alumina, magnesia, zinc oxide, and zinc carbonate. They may be surface treated with silanes, silazanes, low-degree-of-polymerization siloxanes, and organic compounds, prior to use.

When used, the filler is preferably compounded in amounts of 0.1 to 300 parts, more preferably 1 to 100 parts by weight per 100 parts by weight of component (A).

In another preferred embodiment, an inert silicone fluid, preferably a polydimethylsiloxane capped with trimethylsilyl groups at both ends is compounded in the inventive composition. Compounding this component can improve working parameters such as working efficiency and string-break and modify rubber physical properties after curing.

In the RTV organopolysiloxane composition of the invention, other well-known additives such as organic solvents, mildew-proofing agents, flame retardants, heat resistance modifiers, plasticizers, thixotropic agents, adhesion promoters, curing promoters, and pigments may be added, in line with skilled practice and consistent with the effectiveness of the composition.

The inventive composition is obtainable by mixing components (A) to (C) and optionally component (D) and additives in a moisture-shielded atmosphere. The composition thus obtained can be handled as a one package type RTV organopolysiloxane composition. It is received in a closed container for storage. On use it is usually simply exposed to air-borne moisture for cure into a rubbery elastomer.

The inventive composition may find use in various fields, for example, as sealants for buildings, sealants for electric and electronic parts, adhesives, moisture-proof coatings, and coatings and adhesives for fibrous, glass, metal, and plastic articles.

The molding method and curing conditions applied to the RTV organopolysiloxane composition of the invention are as used for ordinary RTV condensation-curing silicone rubber compositions. With respect to the curing conditions, the composition is generally held in an environment at a temperature of 0 to 40°C and a relative humidity of 10 to 90%.

### EXAMPLE

Synthesis Example, Examples and Comparative Examples are given below for further illustrating the invention, but the invention is not limited thereto. All parts are by weight. Viscosity is a measurement at 25°C by a rotational viscometer.

### Synthesis Example 1

A three-necked flask (internal volume 2 L) equipped with a thermometer, stirrer and condenser was charged with 2,500 g of α,ω-dimethylvinyl-dimethylpolysiloxane having a viscosity of 30,000 mPa-s, 400 g of toluene, 11.9 g of trimethoxysilane, and 1.0 g of a 50% toluene solution of chloroplatinic acid as a catalyst, which were stirred for 9 hours at room temperature in a N₂ stream. The reaction solution was then heated at 100°C in a vacuum of 10 mmHg for distilling off the toluene as a diluent and the excess of trimethoxysilane, leaving 2,350 g of a colorless clear liquid having a viscosity of 40,000 mPa-s and a nonvolatile content of 99.9%. When this liquid was mixed with tetrapropyl titanate in a ratio of 100:1, it did not thicken immediately and cured after one day. This proves the addition of methyltrimethoxysilane to vinyl groups at polymer ends. This polymer is designated Polymer A.

### Example 1

A composition was prepared by intimately mixing 100 parts of Polymer A with 90 parts of colloidal calcium carbonate surface treated with fatty acid and 30 parts of crystalline silica and further mixing them with 9 parts of phenyltrimethoxysilane and 9 parts of Compound A of formula (5) (T-2837 by Matsumoto Chemical Co., Ltd., tetra-tert-butyl titanate oligomer) under moisture-shielded conditions until uniform.

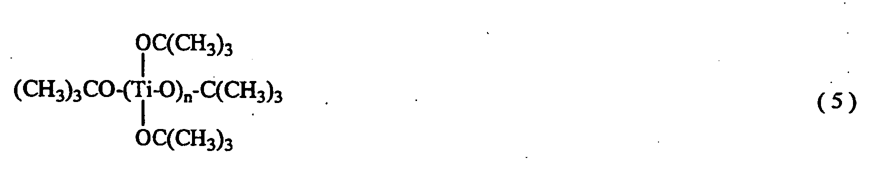

### Example 2

A composition was prepared by intimately mixing 100 parts of Polymer A with 90 parts of colloidal calcium carbonate surface treated with fatty acid and 30 parts of crystalline silica and further mixing them with 9 parts of phenyltrimethoxysilane and 9 parts of Compound B of formula (6) (T-2839 by Matsumoto Chemical Co., Ltd., tetra-tert-pentyl titanate oligomer) under moisture-shielded conditions until uniform.

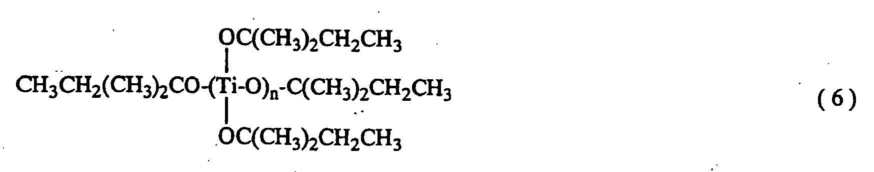

### Example 3

A composition was prepared by intimately mixing 100 parts of Polymer A with 45 parts of both end methyl-blocked polydimethylsiloxane, 90 parts of colloidal calcium carbonate surface treated with fatty acid, and 30 parts of crystalline silica and further mixing them with 9 parts of phenyltrimethoxysilane and 9 parts of Compound A of formula (5) (T-2837 by Matsumoto Chemical Co., Ltd., tetra-tert-butyl titanate oligomer) under moisture-shielded conditions until uniform.

### Comparative Example 1

A composition was prepared by the same procedure as in Example 1 except that tetra-tert-butyl titanate was used instead of Compound A of formula (5).

### Comparative Example 2

A composition was prepared by the same procedure as in Example 1 except that butyl titanate dimer having formula (7) (Orgatics TA-22 by Matsumoto Chemical Co., Ltd.) was used instead of Compound A of formula (5).

(BuO)₃Ti-O-Ti(OBu)₃ (7)

Herein Bu is n-butyl.

The compositions of Examples and Comparative Examples were shaped into sheets of 2 mm thick and cured in an atmosphere of 23±2°C and RH 50±5% for 7 days, after which the physical properties (hardness, elongation at break, tensile strength) of the rubber sheets were measured according to JIS K6249. The sheets were visually observed for appearance. The operator smelled the compositions to see whether or not they gave an unpleasant odor. Also, a tack-free time was measured according to the method of JIS A5758.

Separately, the compositions were coated onto resin adherends of 25 × 100 × 2 mm (thick) and held at room temperature until rubber elastomers were obtained. The adhesion of the cured coating to the adherend was visually examined by pulling the cured coating. The resin adherends used herein included those of hard polyvinyl chloride (PVC), polystyrene, polycarbonate (PC), and acrylic resin, which are commonly used as building material.

A storage stability test was carried out by filling a cartridge with the uncured composition, heating.the package in a dryer at 70°C, dispensing the composition from the package, and allowing the composition to cure in an atmosphere of 23±2°C and RH 50±5% for 7 days. Like the initial compositions, the aged compositions (or rubbers) were measured for physical properties, tack-free time, and adhesion.

The results of Examples and Comparative Examples are shown in Tables 1 and 2.

**Table 1**

| | | | Example | | |
|---|---|---|---|---|---|
| | | | 1 | 2 | 3 |
| Catalyst | | | A | B | A |
| Initial physical properties | Sheet appearance | | Good | Good | Good |
| | Tack-free time (min) | | 3 | 3 | 6 |
| | Hardness (Durometer A) | | 55 | 60 | 35 |
| | Elongation at break (%) | | 500 | 520 | 420 |
| | Tensile strength (MPa) | | 3.30 | 3.50 | 2.10 |
| | Resin adhesion ^{*1} | Hard PVC | ○ | ○ | ○ |
| | | Polystyrene | ○ | ○ | ○ |
| | | PC | ○ | ○ | ○ |
| | | Acrylic | ○ | ○ | ○ |
| Odor ^{*2} | | | ○ | ○ | ○ |
| Aged physical properties | Tack-free time (min) | | 4 | 4 | 7 |
| | Hardness (Durometer A) | | 50 | 55 | 31 |
| | Elongation at break (%) | | 590 | 550 | 420 |
| | Tensile strength (MPa) | | 2.80 | 3.00 | 1.74 |
| | Resin adhesion ^{*1} | Hard PVC | ○ | ○ | ○ |
| | | Polystyrene | ○ | ○ | ○ |
| | | PC | ○ | ○ | ○ |
| | | Acrylic | ○ | ○ | ○ |

| | | | | | |
|---|---|---|---|---|---|
| *1 resin adhesion ○: good, Δ: partially stripped, ×: poor *2 odor ○: acceptable, ×: unpleasant | | | | | |

**Table 2**

| | | | Example | Comparative Example | |
|---|---|---|---|---|---|
| | | | 1 | 1 | 2 |
| Catalyst | | | A | C | D |
| Initial physical properties | Sheet appearance | | Good | Poor (cured clumps co-present) | Good |
| | Tack-free time (min) | | 3 | 1 | 10 |
| | Hardness (Durometer A) | | 55 | 57 | 50 |
| | Elongation at break (%) | | 500 | 470 | 590 |
| | Tensile strength (MPa) | | 3.30 | 3.10 | 3.50 |
| | Resin adhesion ^{*1} | Hard PVC | ○ | ○ | ○ |
| | | Polystyrene | ○ | × | × |
| | | PC | ○ | ○ | ○ |
| | | Acrylic | ○ | × | × |
| Odor ^{*2} | | | ○ | ○ | ○ |
| Aged physical properties | Tack-free time (min) | | 4 | 2 | >120 |
| | Hardness (Durometer A) | | 50 | 55 | 10 |
| | Elongation at break (%) | | 590 | 420 | 300 |
| | Tensile strength (MPa) | | 2.80 | 2.90 | 1.10 |
| | Resin adhesion ^{*1} | Hard PVC | ○ | ○ | ○ |
| | | Polystyrene | ○ | × | × |
| | | PC | ○ | ○ | ○ |
| | | Acrylic | ○ | × | × |

| | | | | | |
|---|---|---|---|---|---|
| *1 resin adhesion O: good. Δ: partially stripped, ×: poor *2 odor O: acceptable, ×: unpleasant | | | | | |

In respect of numerical ranges disclosed herein it will of course be understood that in the normal way the technical criterion for the upper limit is different from the technical criterion for the lower limit, i.e. the upper and lower limits are intrinsically distinct proposals.

## Claims

1. A room temperature curable organopolysiloxane composition comprising
(A) 100 parts by weight of at least one organopolysiloxane selected from those- of formulae (1) and (2) : 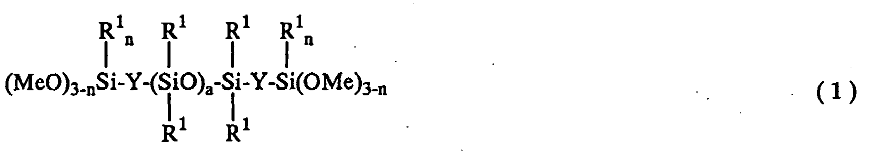 wherein groups R¹ are substituted or unsubstituted, monovalent saturated hydrocarbon groups of 1 to 10 carbon atoms, Y are alkylene groups of 1 to 5 carbon atoms, Me is methyl, "a" is an integer of at least 10, and indices n independently are 0 or 1. 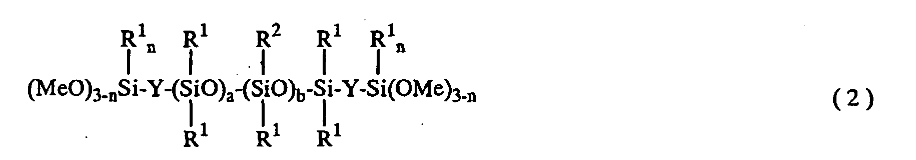 wherein R¹ Y, Me, "a" and n are as defined above, R² is a hydrolysable group-containing branched chain having the general formula (3):
-Y-SiR¹ₙ(OMe)₃₋ₙ (3)
wherein Y, R¹, Me, and n are as defined above, and b is an integer of 1 to 10,
(B) 0.1 to 20 parts by weight of alkoxysilane compound containing, on average, at least two silicon-bonded hydrolysable groups per molecule, a partial hydrolysate thereof or a mixture thereof,
(C) 1 to 15 parts by weight of compound having the general formula (4):
Ti[OTi]_{c}[OR]_{d}[OCR₃]ₑ (4)
wherein R is a monovalent aliphatic hydrocarbon group of 1 to 10 carbon atoms free of a tertiary hydrocarbon group, c is an integer of 1 to 3, d and e are integers satisfying 0.5 ≤ e/(d+e) s 1, and
(D) 0 to 10 parts by weight of silane coupling agent.

2. A composition of claim 1 wherein in component (C), R is methyl, ethyl or isopropyl.

3. A composition of claim 1 wherein in component (C) [OR] is isopropoxy, and [OCR₃] is tert-butoxy and/or tert-pentanol.

4. A method of preparing a composition according to any one of claims 1 to 3, by combining the components thereof.

5. Use of a composition according to any one of claims 1 to 3 to form a cured organopolysiloxane material, for example as or in a sealant, adhesive or coating.

## Patentansprüche

1. Bei Raumtemperatur härtbare Organopolysiloxanzusammensetzung, die Folgendes umfasst:
(A) 100 Gewichtsteile zumindest eines Organopolysiloxans, das aus jenen der Formeln (1) und (2) ausgewählt ist: 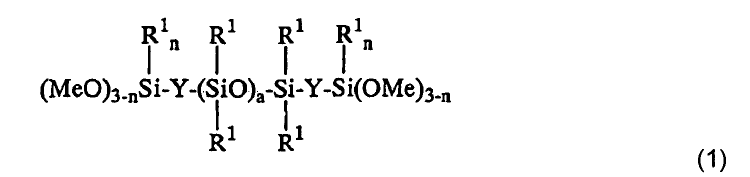 worin die Gruppen R¹ substituierte oder unsubstituierte, einwertige gesättigte Kohlenwasserstoffgruppen mit 1 bis 10 Kohlenstoffatomen sind, Y Alkylengruppen mit 1 bis 5 Kohlenstoffatomen sind, Me Methyl ist, "a" eine ganze Zahl von zumindest 10 ist und die Indizes n unabhängig voneinander 0 oder 1 sind, 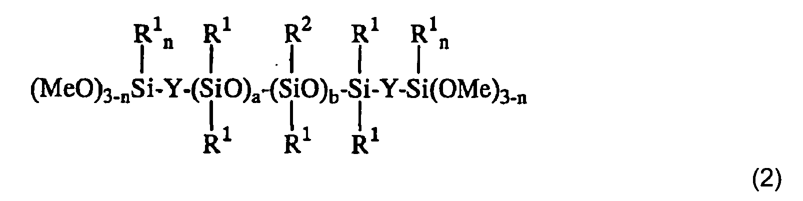 worin R¹, Y, Me, "a" und n wie oben definiert sind, R² eine verzweigte Kette mit hydrolysierbaren Gruppen ist, die die folgende allgemeine Formel (3) aufweist:
-Y-SiR¹ₙ(OMe)₃₋ₙ (3)
worin Y, R¹, Me und n wie oben definiert sind und b eine ganze Zahl von 1 bis 10 ist;
(B) 0,1 bis 20 Gewichtsteile einer Alkoxysilanverbindung, die durchschnittlich zumindest zwei siliciumgebundene hydrolysierbare Gruppen pro Molekül enthält, eines partiellen Hydrolysats oder eines Gemisches davon;
(C) 1 bis 15 Gewichtsteile einer Verbindung der allgemeinen Formel (4):
Ti[OTi]_{c}[OR]_{d}[OCR₃]ₑ (4)
worin R eine einwertige aliphatische Kohlenwasserstoffgruppe mit 1 bis 10 Kohlenstoffatomen ist, die frei von einer tertiären Kohlenwasserstoffgruppe ist, c eine ganze Zahl von 1 bis 3 ist, d und e ganze Zahlen sind, für die gilt 0,5 ≤ e/(d+e) ≤ 1, und
(D) 0 bis 10 Gewichtsteile eines Silanhaftvermittlers.

2. Zusammensetzung nach Anspruch 1, worin R in Komponente (C) Methyl, Ethyl oder Isopropyl ist.

3. Zusammensetzung nach Anspruch 1, worin in Komponente (C) [OR] Isopropoxy ist und [OCR₃] tert-Butoxy und/oder tert-Pentanol ist.

4. Verfahren zur Herstellung einer Zusammensetzung nach einem der Ansprüche 1 bis 3 durch das Kombinieren ihrer Komponenten.

5. Verwendung einer Zusammensetzung nach einem der Ansprüche 1 bis 3 zur Bildung eines gehärteten Organopolysiloxanmaterials, beispielsweise als ein oder in einem Dichtungsmittel, als ein oder in einem Haftmittel oder als eine oder in einer Beschichtung.

## Revendications

1. Composition d'organopolysiloxane durcissable à température ambiante comprenant
(A) 100 parties en poids d'au moins un organopolysiloxane sélectionné parmi ceux des formules (1) et (2): 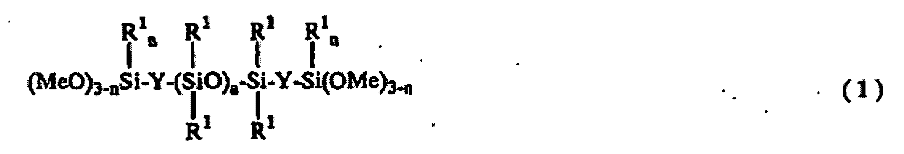 où les groupes R¹ sont des groupes d'hydrocarbures monovalents saturés substitués ou non substitués, de 1 à 10 atomes de carbone, Y sont des groupes alkylènes de 1 à 5 atomes de carbone, Me est méthyle, "a" est un entier d'au moins 10, et les indices n sont indépendamment 0 ou 1. 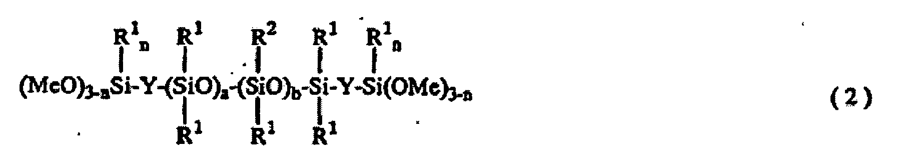 où R¹, Y, Me, "a" et n sont comme définis ci-dessus, R² est une chaîne branchée contenant un groupe hydrolysable ayant la formule générale (3):
-Y-SiR¹ₙ(OMe)₃₋ₙ (3)
où Y, R¹, Me et n sont comme définis ci-dessus, et b est un entier de 1 à 10,
(B) 0,1 à 20 parties en poids du composé d'alcoxysilane contenant, en moyenne, au moins deux groupes hydrolysables liés au silicium par molécule, un hydrolysat partiel de ceux-ci ou un mélange de ceux-ci,
(C) 1 à 15 parties en poids d'un composé ayant la formule générale (4):
Ti[OTi]_{c}[OR]_{d}[OCR3]ₑ (4)
où R est un groupe d'hydrocarbures aliphatiques monovalents de 1 à 10 atomes de carbone exempt d'un groupe d'hydrocarbures tertiaires, c est un entier de 1 à 3, d et e sont des entiers satisfaisant à 0,5 ≤ e/(d+e) ≤ 1, et
(D) 0 à 10 parties en poids d'un agent de couplage de silane.

2. Composition selon la revendication 1, dans laquelle dans le composant (C), R est méthyle, éthyle ou isopropyle.

3. Composition selon la revendication 1, dans laquelle dans le composant (C), [OR] est isopropoxy, et [OCR₃] est tert-butoxy et/ou tert-pentanol.

4. Procédé de préparation d'une composition selon l'une quelconque des revendications 1 à 3, en combinant les composants de celle-ci.

5. Utilisation d'une composition selon l'une quelconque des revendications 1 à 3 pour former un matériau d'organopolysiloxane durci, par exemple comme ou dans un scellement, adhésif ou revêtement.
